# EUROPEAN PATENT APPLICATION

(11) **EP 1 529 756 A1**
(43) Date of publication of application: **11.05.2005**
(21) Application number: 04396076.4
(22) Date of filing: 04.11.2004
(51) Int. Cl.: C02F 1/00, B01D 39/08

(54) **Apparatus and method for treatment of waste water and use of heat-insulating panel**

(30) Priority: 04.11.2003 FI 20031597
(71) Applicant: Maa- Ja Elintarviketalouden Tutkimuskeskus, 31600 Jokioinen (FI)
(72) Inventor: Närvänen, Aaro, 30420 Forssa (FI)
(74) Representative: Nordin, Leif Göran

(57) **Abstract**

The invention comprises an apparatus (1) for treatment of waste water with a mainly closed casing (2) where at least one maintenance hatch (3) is arranged. A waste water inlet (12) and a waste water outlet (13) are arranged through the casing (2). Within the casing (2) there is further arranged a waste water filter (11) made at least mainly of a decomposable and plate-like material, through which the waste water coming from the inlet (12) is arranged to pass before it is discharged through the outlet (13). A compost (7) is arranged within the same casing (2) with the filter (11), in which compost an exhausted filter can be composted. The compost is arranged to be at least mainly separated from the path of the waste water. The invention also comprises a method for treatment of waste water and a new manner to use a heat-insulating panel.

## Description

### Technical field of the invention

The object of the invention is a waste water treatment apparatus and method according to the preambles of the independent claims presented below and a new way to use a decomposable heat-insulating panel. The invention relates particularly to a manner for treating waste water which is suitable for households in scattered settlements and in the agriculture, and which utilises decomposable filter material.

### Prior art

The use of biologically decomposable filters in the treatment of waste water is known from e.g. the patent publications DE 4105605 and US 4137062. The known methods and equipment are complicated and require much maintenance actions. They are not applicable to water treatment in scattered settlements, which require good treatment results with few maintenance operations. The prior art solutions require expensive special equipment, such as cranes and conveyors and factory produced filters. The prior art solutions use composting only as a means to get rid of the waste, but not as a part of the water treatment process. During the cold season it is very unlikely that the prior art equipment will operate, at least efficiently, without separate heating.

### The object and description of the invention

The main object of the present invention is to reduce or even to eliminate the above mentioned problems encountered in prior art.

An object of the present invention is particularly to provide a simple, inexpensive, efficient, and reliably operating method and an apparatus for treating waste water.

One object of the invention is to utilise compost in a new manner as a part of the waste water treatment.

In order to realise the above mentioned objects, among other things, the waste water treatment apparatus and method are characterised in what is presented in the characterising parts of the enclosed independent claims.

The embodiment examples and advantages mentioned in this text are applicable in suitable parts both to the waste water treatment apparatus and the method according to the invention, even if it is not always particularly mentioned.

A typical waste water treatment apparatus according to the invention comprises a mainly closed casing where at least one maintenance hatch is arranged. A waste water inlet and a waste water outlet are arranged through the casing. A waste water path is arranged between said inlet and outlet, i.e. a path along which the waste water passes within the casing during a normal operating mode. Further a waste water filter made at least mainly of a decomposable material is arranged within the casing, through which filter the waste water is arranged to pass before it is discharged through the outlet. Within the same casing with the filter there is arranged a compost, in which an exhausted filter can be composted. The apparatus typically comprises separate filter and compost sections. The compost section and the compost kept in it are arranged to be located at least mainly, advantageously entirely separated from the waste water path. Thus, the compost is not moistened by the waste water, and it will operate efficiently. The filter in use and the compost are in a mutual heat-exchanging connection, so that the heat generated by the compost can pass e.g. through the open air space in the upper part of the casing to heat the filter. Thus, the apparatus can maintain its operability also during the cold season without external heating. A mainly closed casing means that the casing is airtight, at least to a certain degree, whereby heat and odours are retained within the apparatus. In order to operate the compost needs oxygen, so it must be supplied to the apparatus, for instance via air holes of suitable size. At least that part of the casing, which is intended for waste water treatment, is advantageously also liquid-tight. The casing can also be specially heat-insulated. An apparatus according to the invention can also be provided with auxiliary heating, such as an electric resistor, in order to prevent freezing, for instance if the apparatus is intended to be used in very cold conditions. A typical filter according to the invention is of a plate-like material, for instance an insulation panel. Then the filter can be easily arranged even as a single piece. A panel of this kind can be easily replaced to a new one. It is also easy to make a plate-like filter watertight along its edges.

In a typical waste water treatment method according to the invention the waste water is filtered by a plate-like filter, and a used filter is in addition composted in the same mainly closed space together with the filter in use, whereby heat energy is exchanged at the same time between the filtering process and the composting process. In a typical method the decomposing used filter is kept at least mainly separated from the main path of the waste water within the apparatus. Thus the compost will not get too wet and it will not be cooled too much, but it can continuously operate efficiently.

The greatest advantage of the invention is that the heat generated by the compost can be utilised. Therefore the waste water and the filter will not easily freeze, even if the external temperature would be low.

Another great advantage of the invention is that a used filter can be easily moved from the filter section to the compost section. No separate waste processing is required.

An advantage of the invention is that all decomposable waste from a household can be processed in the same compost.

An advantage of the invention is that the filtering process can be easily arranged so that the water to be treated is automatically aerated, whereby the oxygen consumption values of the water will decrease.

An advantage of the invention is that a microbe population will be automatically created in the filter so that it operates as a part of the treatment method reducing the biological oxygen consumption of the waste water. The heat generated by the compost aids the microbe population to stay alive and remaining efficient in cold weather.

A heat-insulating panel being mainly or entirely decomposable can be suitably used as a filter according to the invention. Heat-insulating panels are readily available in a form, which is suitable for this purpose. Experiments have shown that for instance a flax insulating panel on the market is very suitable for the purpose of the invention. Other materials suitable for a filter according to the invention are different organic fibres, such as hemp, different pellets, briquets and fibre panels made of wood or peat, and paper or paperboard in different forms. The plate-like structure of a flax panel has been found to withstand very well the use according to the invention. An advantage of flax is also that the decomposition will not generally start unnecessarily early. In some decomposable materials the decomposition can start already after a few hours, for instance when it is dry during one night. It has also been found that flax retains its plate-like structure quite intact after it has been clogged, and even after long periods submerged in water.

In the method and apparatus according to the invention the incoming waste water can be directed onto the top surface of the filter panel. Then the waste water is filtered through the filter due to gravity.

A filter panel according to the invention can be arranged in an inclined position. The inclination can be arranged for instance so that the mainly straight panel has one edge lower than its opposite edge. Then the waste water is accumulated above the panel's lower edge and tends to penetrate the filter at this lower edge. An arrangement like this has many advantages, which among others are:
- The filter will begin to clog at the lower edge, and new, unused filter will constantly become into use as the water level rises along the filter surface. The unused filter surface can easily treat any incoming large transient water pulses.
- A simple and reliably operating overflow opening can be easily arranged at the top edge of the filter.
- Due to the overflow opening at the top edge the apparatus operates as a settling tank, because the overflow takes place over the edge.
- By looking through the maintenance hatch one can immediately see the limit, up to which the water has risen. The height of this limit and the colour of the filter act as good indicators for the remaining operating time of the filter.
The panel can also be arranged in an inclined position for instance so that the central part of the panel is located higher up than its edges. The panel can also be arranged in an arched form.

In an application of the method according to the invention a chemical phosphor coagulant is dispensed into the waste water before filtering the waste water. A waste water treatment apparatus according to the invention can comprise means for dispensing the chemical coagulant to the incoming waste water. As a chemical of this kind one can use for instance ferric sulphate, or aluminium sulphate. If the chemical coagulant is dispensed in an apparatus according to the invention or just before it the main part of the phosphor can be made to precipitate in the filter according to the invention. The dispensing of the chemical coagulant can also be arranged earlier in the process, and the waste water can have its own settling tank before it is directed to an apparatus according to the invention. In order to enhance the effect of the apparatus at least a portion of the waste water passing through the filter, sometimes the whole water volume, can be recirculated to the phosphor coagulant dispensing station and further to the filter. With the aid of the chemical coagulant it is possible to remove the main part of the unpleasant odour from the waste water, whereby the apparatus can be located even close to residential buildings. It is of course possible to use with the invention any other chemicals used in waste water treatment and precipitation, such as aluminium or ferric chloride, sodium aluminate, calcium hydroxide or polyelectrolytes.

In a waste water treatment apparatus according to the invention a pump can be combined with the waste water inlet. Then the apparatus according to the invention can be located for instance next to a septic tank or the like. Then the water to the apparatus according to the invention is taken from this septic tank with the aid of the pump. Then the filtered water can at least partly be made to recirculate back to the septic tank. The pump can of course also be made manually operated, or it can be made to start according to the water level in the septic tank. If water is recirculated to the septic tank this can provide aeration of the sludge in the septic tank. Thus the biological treatment is made more efficient. For instance a timer can make the process look like it would be continuously operating.

The waste water discharged from an apparatus according to the invention, or at least a portion of it, can be directed to a absorption field planted with willows or corresponding plants. Experiments have shown that this kind of further treatment will make the treatment substantially more effective.

The same casing with the waste water filter can very advantageously contain a frequently used, preferably daily used domestic compost or some other compost. Thus it is easy to frequently inspect the operation of the apparatus. The user can check for instance the following things: have the chemical coagulants or other chemicals run out or are they about to run out; is there a suitable temperature in the apparatus; does the apparatus smell; does the filter operate or should it be replaced.

### Short description of the figures

The invention is described in more detail below with reference to the enclosed schematic drawing, in which:
Figure 1 shows a waste water treatment apparatus according to the invention;
Figure 2 shows a possible waste water treatment system according to the invention;
Figure 3 shows another waste water treatment apparatus according to the invention;
Figure 4 shows a third waste water treatment apparatus according to the invention;
Figure 5 shows a fourth waste water treatment apparatus according to the invention; and
Figure 6 shows a fifth waste water treatment apparatus according to the invention.

### Detailed description of the embodiments of the figures.

The same reference numerals are used for equivalent parts.

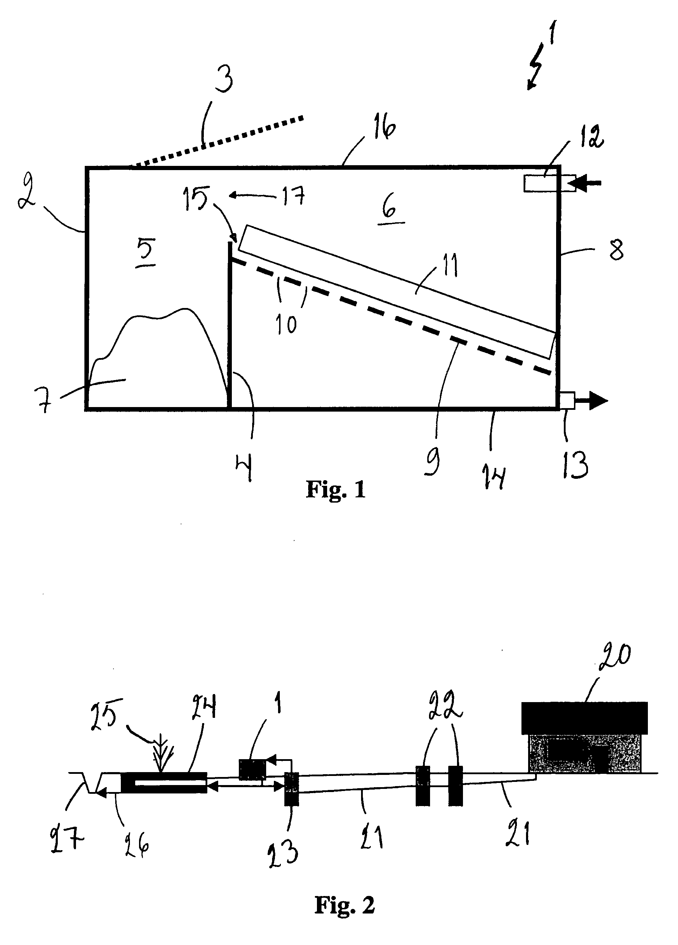

Figure 1 shows a waste water treatment apparatus 1 according to the invention, which has a mainly closed casing 2 made of plastics. A maintenance hatch 3 is drawn in broken lines on the top surface of the apparatus, which hatch can be opened and closed tightly. A partition 4 divides the interior of the apparatus 1 into a compost section 5 and a filter section 6. A compost 7 is drawn in the compost section, which compost 7 is serviced through the maintenance hatch 3. An inclined filter support surface 9 with a plurality of holes 10 is arranged in the filter section 6, between the partition 4 and the end wall 8. A filter panel 11, made of a completely or at least almost completely decomposable material, is arranged on the support surface 9. The filter panel 11 can be for instance an insulating panel made of flax, which is used in housing construction and which is available on the market. A waste water inlet 12 is located at the top edge of the filter section 6, above the filter panel 11. A waste water outlet 13 is located at the bottom edge of the filter section 6, below the filter panel 11. The bottom 14 and the partition 4 of the filter section are liquid tight, so that the waste water in the filter section 6 cannot reach the compost section 5. An overflow opening 15 is left between the top edge of the partition 4 and the top edge of the filter panel 11. The partition 4 does not extend up to the roof 16 of the apparatus 1, but an air gap 17 is left between them. The figure does not show the air holes or the like needed for supplying the air required by the compost 7.

The apparatus 1 operates in the following way. The waste water coming from the inlet 12 into the apparatus is filtered through the filter 11 and then it flows through the holes 10 in the support surface 9 to the bottom 14 of the apparatus and further out via the outlet 13. Due to the inclined filter 11 the filter will be clogged, starting at the lower edge, so that the water level above the filter 11 gradually rises toward the top edge of the filter 11. If the apparatus 1 receives very large quantities of waste water, or if the filter 11 is already completely clogged, then the water flows over the overflow edge of the filter 11, via the overflow opening 15 and into the space below the filter. When the filter 11 is exhausted, it can be moved to the other side of the partition 4, where it will decompose. Any other biologically decomposable waste can also be put through the maintenance hatch 3 to the compost 7. The heat generated by the compost 7 will keep the whole interior of the apparatus 1 warm also during the winter. Warm air from the compost space 5 can reach the filter space 6 via the air space 17 between the partition 4 and the roof 16 of the apparatus. However, in very cold conditions it is of course possible to install an auxiliary heater in the apparatus 1, for instance an electric resistor in order to keep the filter unfrozen.

Figure 2 shows schematically one possible domestic waste water treatment system according to the invention for scattered settlements. A sewer pipe 21 leads from the house 20 to two conventional septic tanks. From the septic tanks 21 the pipe extends to a pump well 23, where a pump pumps the waste water according to the arrow into a waste water treatment apparatus 1 according to the invention. The apparatus 1 comprises dispensing equipment for a chemical phosphor coagulant, such as ferric sulphate, whereby the waste water is first pumped through the dispensing equipment in order to mix ferric sulphate into the water. Further, in the manner shown by the example of figure 1, the apparatus 1 comprises a composting means 5 and a filter, which is entirely or at least mainly decomposable. The precipitate generated by the ferric sulphate is at least mainly entrapped in the filter 11. The composting means 5 can compost both the used filters 11 and biological waste generated in the household 20. The treated waste water from the apparatus 1 can be directed either back to the pump well 23 or to further treatment in a absorption field 24, for instance planted with willows or crack willows 25. In the absorption field 24 the cleaned waste water is finally directed through underdrains 26 to an open ditch 27. The pump in the pump well 23 can be installed also directly in the septic tank 22, whereby a separate pump well is not needed.

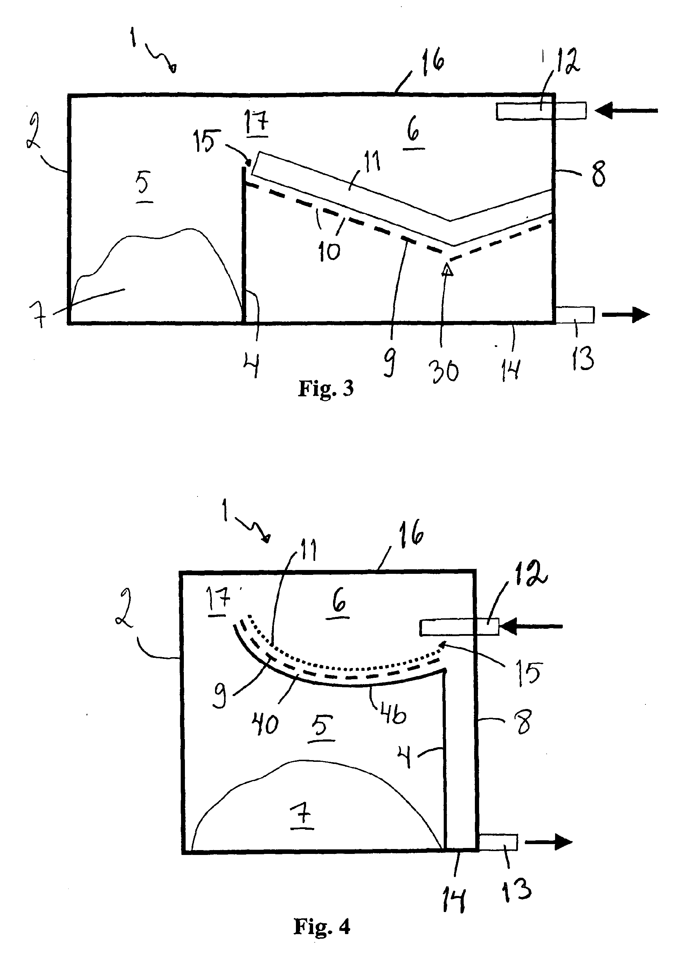

Figures 3, 4, 5 and 6 show two alternative designs for a waste water treatment apparatus 1 according to the invention. For the sake of clarity the examples of figures 3 and 4 use the same reference numerals as the example of figure 1. The example of figure 3 shows a waste water treatment apparatus, which greatly resembles that of figure 1. The difference is the form of the filter panel 11 and its supporting surface 10. The supporting surface 10 and the filter plate 11 are bent, so that one portion 30 between the panel's edges is lower than the edges. This provides for instance that advantage that the liquid over the filter 11 in normal use is kept away from the edges of the filter 11. Then the gap between the panel 11 and the walls of the apparatus may be without sealing, but the overflow can occur over many or even all edges of the filter 11.

In the apparatus 1 of figure 4 the filter part 6 is arranged at least mainly above the compost section 5 by bending the upper part 4b of the partition in an almost horizontal position. A space 40 is arranged between the supporting surface 10 and the partition 4b where the liquid penetrating the filter 11 can flow to the waste water outlet 13. The overflow 15 is arranged to occur towards the outlet 13, away from the compost section 5. In this example the heat generated by the compost 7 will effectively heat the filter 11.

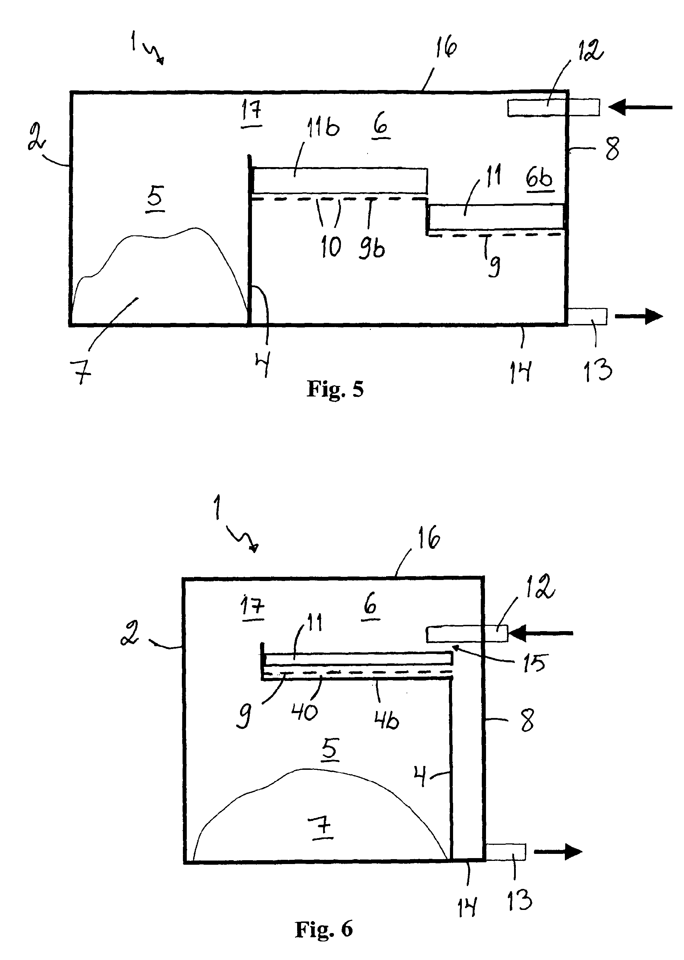

The apparatus 1 of figure 6 differs from that of figure 4 in that the upper part 4b of the partition is at least substantially horizontal. The inclination in relation to the horizontal of the upper part 4b of the partition, the support surface 10 arranged on the upper part, and the filter 11 arranged on the support surface is for instance less than 5 degrees or less than two degrees, or even less than one degree. In an arrangement like this the whole area of the filter 11 will be in even and effective filter use already at small waste water flows coming into the apparatus.

Figure 5 shows an apparatus 1 having two substantially horizontal filter supporting surfaces 9 and 9b arranged at different heights. Two filter panels 11 and 11b have been placed on the supporting surfaces at different heights. The waste from the inlet is directed mainly over the filter panel 11, which is located lower. The lower filter panel 11 is intended to be the main filter of the apparatus. If the waste water input flow is exceptionally high or if the lower filter 11 is clogged, then the space 6b over the lower filter 11 and below the top surface of the upper filter 11b can become filled with waste water. Then the waste water begins to flow also over the upper filter 11b. As the upper filter 11b is relatively little used, the waste water can effectively penetrate it. Due to the high permeability of the upper filter panel 11b the staggered apparatus 1 of figure 5 does not necessarily require a separate overflow opening. However, such an opening can be easily arranged for instance between the filter panel 11b and the partition 4 in order to direct excessive waste water below the supporting surfaces 9 and 9b, to the bottom 14.

In figure 5 the filter panels 11 and 11b are drawn with different widths. If these two filter panels are of the same size the apparatus 1 can be used so that when the lower filter panel 11 is clogged it is moved to decompose in the composting section 5 and the upper, cleaner filter panel is moved to replace the lower panel, on the supporting surface 9. Then a new unused filter panel is placed on the upper supporting surface 9b.

The apparatus 1 according to the invention having several different filter surfaces, such as in the example of figure 5, can be automated for instance so that when one filter panel is clogged the water is not anymore directed to the clogged filter but to another clean filter. Then the apparatus 1 would in other words comprise means for detecting the clogging of the lower filter panel 11 and means for directing the water to the upper filter panel 11b. Such means for detecting the clogging of the lower filter panel 11 could be for instance a water level detector mounted for instance in the space 6b. When a detector of this kind detects that the water level has risen a certain distance above the top surface of the filter panel 11 it generates a certain signal. This signal activates the means for directing the water to the upper filter 11b. These means for directing the water to the upper filter 11b can be for instance means for turning or moving the water inlet 12, which would change the spot receiving the waste water 12 coming from the inlet to the apparatus 1 to the upper filter panel 11b. This automatic water direction would operate well also in other apparatuses than that shown in figure 5 comprising two or more filter panels. The filter panels can be for instance in the same plane adjacent to each other. It is also possible that the places of the filter panels can be exchanged, for instance with the aid of rails fastened to the filter panels and to the apparatus 1, wheels adapted to these, and an electric motor, whereby the water inlet can be stationary. If no water is longer supplied to a clogged filter it will gradually dry, and when it has suitably dried it can be moved to the compost for decomposition.

The enclosed figures show only filter panels, which are made of a homogenous material being of a relatively uniform quality. A filter according to the invention could comprise multiple layers, which are placed on top of each other or on different levels. There could be for instance 2, 3, 4, 5, 6, 7, 8, 9 or 10 different layers. Then for instance the upper layers could be of a coarser material and the lower layers of a material with a finer distribution. Thus the water would pass through a number of different filter layers.

The figures show only preferred embodiment examples of the invention. To a person skilled in the art it is obvious that the invention is not restricted only to the examples presented above, but that the invention can vary within the scope of the claims presented below. The dependent claims present some possible embodiments of the invention, and as such they must not be considered to limit the scope of the invention.

## Claims

1. Apparatus (1) for treatment of waste water comprising:
- a mainly closed casing (2) where at least one maintenance hatch (3) is arranged;
- a waste water inlet (12) and a waste water outlet (13) leading through the casing (2), and a waste water path between said inlet and outlet;
**characterised in that** within the same casing (2) it further comprises:
- a plate-like waste water filter (11) made at least mainly of a decomposable material and arranged in the waste water path between the waste water inlet and outlet (12, 13); and
- a compost (7), which is arranged to be at least mainly separated from the waste water path;
which are arranged to be in heat-exchanging communication with each other.

2. An apparatus (1) for treatment of waste water according to claim 1, **characterised in that** the waste water coming to the apparatus (1) is advantageously directed onto the top surface of the filter panel (11).

3. An apparatus (1) for treatment of waste water according to claim 2, **characterised in that** the filter panel (11) is arranged in an inclined position.

4. An apparatus (1) for treatment of waste water according to any previous claim, **characterised in that** it comprises a pump connected to the inlet (12), and means for operating the pump, for instance a timer to start the pump at predetermined intervals.

5. An apparatus (1) for treatment of waste water according to any previous claim, **characterised in that** it comprises means for dispensing a chemical coagulant to the incoming waste water.

6. A method for treatment of waste water with a filter (11), **characterised in that** it further comprises steps for
- composting a used filter in the same, mainly closed space (2), where the plate-like filter (11) is in use;
- keeping the decomposing used filter at least mainly separated from the waste water path;
- exchanging heat energy between the filtering process and the composting process.

7. A method according to claim 6, **characterised in that** before filtering the waste water a phosphor precipitating chemical is dispensed to the waste water.

8. A method according to claim 7, **characterised in that** after filtering at least a portion of the waste water is returned to the filtering via the dispensing of the phosphor precipitating chemical.

9. A method according to claim 6, **characterised in that** after the filtering at least a portion of the waste water is directed to an absorption field (24), which is planted with willows or corresponding plants (25).

10. The use of a mainly or entirely decomposable heat-insulating panel (11) as a filter material in an apparatus (1) for treatment of waste water or in a method for treatment of waste water.
